# EUROPÄISCHE PATENTANMELDUNG

(11) **EP 0 659 530 A2**
(43) Veröffentlichungstag der Anmeldung: **28.06.1995**
(21) Anmeldenummer: 94119702.2
(22) Anmeldetag: 14.12.1994
(51) Int. Cl.: B29C 39/00, C08K 3/36, C04B 26/06

(54) **Verfahren zur Herstellung von hochgefülltem Kunststoff-Plattenmaterial**

(30) Priorität: 22.12.1993 DE 4343868
(71) Anmelder: Röhm GmbH, D-64293 Darmstadt (DE)
(72) Erfinder: Ittman, Günther, D-64823 Gross-Umstadt (DE); Krieg, Dr. Manfred, D-64289 Darmstadt (DE)

(57) **Zusammenfassung**

Die Erfindung betrifft ein Verfahren zur Herstellung von hochgefülltem Kunststoff-Plattenmaterial nach dem Kammer-Polymerisations-verfahren unter Verwendung einer gebräuchlichen, monomerhaltigen Vorlösung und an sich gebräuchlicher Füll- und Hilfsstoffe, wobei man die monomerhaltige Vorlösung VL in die füllstoffhaltige Suspension überführt und das somit gebildete, mindestens einen radikalischen Initiator enthaltende, Gießharz in die Polymerisationskammer verfüllt, die Polymerisation vornimmt und anschließend entformt, wobei das Gießharz pyrogenes oder thermisch erzeugtes, hochdisperses Siliciumdioxid in Mengen von 0,1 bis 5 Gew.-% enthält.

## Beschreibung

### Gebiet der Erfindung

Die Erfindung betrifft ein Verfahren zur Herstellung von hochgefülltem Kunststoff-Plattenmaterial auf Polymethylmethacrylat-Basis, hergestellt nach dem Kammer-Polymerisationsverfahren.

### Stand der Technik

Kunststoff-Platten auf Polymethylmethacrylat-(PMMA)-Basis werden seit Jahrzehnten in vielfach bewährter Weise nach dem Gießverfahren mit Hilfe einer aus Glasplatten und Dichtungsringen bzw. auch aus polierten Metallplatten bestehenden Kammer hergestellt ("Kammerpolymerisation": vgl. H. Rauch-Puntigam, Th. Völker, Acryl- und Methacrylverbindungen, S. 274 - 292, Springer-Verlag 1967).
In jüngerer Zeit wurden zahlreiche Verfahren zur Herstellung von Kunststoff-Plattenmaterial auf Polyacrylatbasis angegeben, das mit partikelförmigem anorganischem Füllmaterial dotiert war. In der JP-Kokai 62,197 346 (Chem. Abstr. 107, 2189346y) wird z.B. ein marmorähnliches PMMA-Plattenmaterial beschrieben, zu dessen Herstellung zerkleinertes, Al-Silikatteilchen mit 1 - 30 µm Durchmesser und roten Farbstoff enthaltendes Acrylharz mit der üblichen Polymervorstufe vermischt und in einer Glas-Form auspolymerisiert (gehärtet) wird.

Die gleichzeitige Anwendung von gepulvertem Cristobalit (Durchmesser 10 - 40 µm) bzw. Quarz und Al(OH)₃ (Durchmesser 2 - 5 µm) zur Herstellung von Dekorplatten mit Marmorcharakter wird in JP-Kokai 60,231 729 (Chem. Abstr. 104, 150191t) beschrieben.
Gegossene Acrylglasplatten mit glatter Oberfläche werden laut JP-Kokai 76,40 108 (Chem. Abstr. 88, 90641d) unter Verwendung von SiO₂ mit Durchmesser ≦ 44 um hergestellt. Die Anwendung von oberflächlich oxidierten Aluminiumplatten zur Herstellung von mit gepulvertem Quarz (das mit γ-Methacryloxypropyltrimethoxysilan kompatibler gemacht wurde) gefüllte PMMA-Plattenmaterial wird in JP-Kokai 61 271 302 (Chem. Abstr. 106, 215075w) gelehrt. Gefüllte PMMA-Platten mit rauher Oberfläche, die mindestens 20 Gew.-% Al(OH)₃-Partikel im Größenbereich 20 - 80 µm enthalten, werden in JP-Kokai 61 108 536 (Chem. Abstr. 105, 227922n) beschrieben.
Weitere Druckschriften behandeln die Anwendung von silanisierten SiO₂-Partikeln mit durchschnittlichem Partikeldurchmesser 0,05 - 50 µm (vgl. JP-Kokai 61 69 867, (Chem. Abstr. 105, 173745m) oder partikelförmiges Calciumcarbonat (Durchmesser 1 - 20 µm) [Vgl. JP-Kokai 57 155 145 (Chem. Abstr. 98, 90499v); Ind. Pat. 146 892 (Chem. Abstr. 93, 47799c)].

### Aufgabe und Lösung

Die Herstellung von hochgefülltem Kunststoff-Plattenmaterialien, d.h. Material mit mindestens 40 und bis zu etwa 80 Gew.-% Anteil eines oder mehrerer anorganischer Füllstoffe auf PMMA-Basis unter Verwendung eines PMMA-Praepolymerisats stellt die Technik auch weiterhin vor Probleme. Zunächst müßte das partikelförmige Füllermaterial in der organischen Phase suspendiert werden.
Bedingt durch die verlängerte Standzeit der Suspension vor der Polymerisation in der Kammer ist mit teilweiser Sedimentation der Füllstoffteilchen auf die Unterfläche der Polymerisationskammer zu rechnen.
Diese partielle Sedimentation der Füllstoffteilchen vor der Polymerisation macht sich nach der Polymerisation und Entformung in Form durchgebogener Platten bemerkbar. Es bestand somit die Aufgabe die Sedimentation der Füllstoffteilchen zu verhindern oder mindestens soweit herabzusetzen, daß keine Durchbiegung der gegossenen Platten mehr auftritt.
Es wurde nun gefunden, daß ein relativ geringer Zusatz von pyrogenem oder thermisch erzeugtem, hochdispersem Siliciumdioxid zu der im Einklang mit dem Stand der Technik hergestellten Suspension der Füllstoffteilchen im Praepolymerisat aus Polymethylmethacrylat und Methylmethacrylat, das noch weitere Bestandteile enthalten kann, die Sedimentation der Teilchen vor der Polymerisation verhindert. Man erhält nach Abschluß der Polymerisation Platten, die nicht durchgebogen sind. Die Erfindung betrifft somit ein Verfahren zur Herstellung von hochgefülltem Kunststoff-Plattenmaterial auf Polymethylmethacrylat-Basis nach dem Kammerpolymerisationsverfahren, wobei man ausgehend von einer Vorlösung VL vorzugsweise enthaltend Monomere M, speziell Methylmethacrylat und ein Polymethylmethacrylat-Praepolymerisat (PM) vorzugsweise Polymethylmethacrylat und gegebenenfalls ein bifunktionelles vernetzendes Monomeres und ein an sich bekanntes Silanisierungsmittel eine Suspension des partikelförmigen Füllermaterial herstellt, die so hergestellte, mindesten einen Radikal-Initiator enthaltende, Suspension in eine Polymerisationskammer verfüllt, unter Erwärmung die Polymerisation vornimmt und nach Abschluß der Polymerisation entformt, dadurch gekennzeichnet, daß man zu der Suspension pyrogenes oder thermisch erzeugtes, hochdisperses Siliciumdioxid zusetzt.
Unter dem erfindungsgemäß anzuwendenden, pyrogenen oder thermisch erzeugten hochdispersen Siliciumdioxid versteht die Technik solche Kieselsäureprodukte, die durch Flammenhydrolyse bzw. nach dem Lichtbogenverfahren hergestellt worden sind (vgl. Ullmanns Encyclopädie der Technischen Chemie, 4. Auflage Bd. 18, S. 652 - 653 Verlag Chemie; Kirk-Othmer, Encyclopedia of Chemical Technologie, 3rd. Ed. Vol. 20, 768 - 773, J. Wiley 1982). Im allgemeinen hat das hochdisperse, pyrogene Siliciumdioxid einen SiO₂-Gehalt von ≧ 99,7 %. Es ist aus amorphen, kugelförmigen Teilchen mit in der Regel einem Durchmesser von 5 - 50, speziell bis 20 nm aufgebaut. Die Primärteilchengröße von nach dem Lichtbogenverfahren hergestellten Siliciumdioxid liegt bei 5 - 500 nm. Die Dichte beträgt bei beiden Produkttypen ca. 2,2 g/cm². Bevorzugt wird die Anwendung der durch Flammenhydrolyse erzeugten pyrolgenen Kieselsäue.
Besonders bevorzugt sind die Produkte, die als AEROSIL ® oder CABO-SIL ®, speziell die unter der Bezeichnung AEROSIL ® 200 im Handel erhältlichen Produkte. Zweckmäßig liegt der Anteil des pyrogenen oder thermisch erzeugten, hochdispersen Siliciumdioxids an der Suspension im Bereich 0,1 bis 5,0 Gew.-%; als Anhalt seien 0,5 Gew.-% genannt.

Weiter können den Gießharzen, bevor sie in die Polymerisationskammer verfüllt werden, noch weitere, an sich bekannte Zusatzstoffe und Hilfsmittel, insbesondere Pigmente bzw. Farbmittel, Lichtschutzmittel und Stabilisatoren, Gleitmittel und Entformungshilfsmittel in den dafür üblichen Mengen (vgl. Ullmann's Encyclopedia of Industrial Chemistry, 5th. Ed. Vol. A20, pg. 459 bis 507, VCH 1992) zugesetzt werden.
Das erfindungsgemäße Verfahren schließt sich weitestgehend an die Kammerpolymerisationsverfahren des Standes der Technik an (vgl. H. Rauch-Puntigam, Th. Völker Acryl- und Methacrylverbindungen loc.cit. Vieweg-Esser, Kunststoff-Handbuch Bd. IX, Polymethacrylate, C.Hanser München 1975; EP 218 866; US-A 3 847 865; US-A 4 221 697; US-A 4 251 576; US-A 4 826 901; US-A 4 786 660).

Als flüssige Polymervorstufe sind Monomere M bzw. Monomermischungen geeignet, wie in EP-PS 218 866 beschrieben. Die Monomeren M, die vorzugsweise ein oder mehrere Praepolymerisate PM enthalten - speziell MMA und PMMA - werden vorzugsweise radikalisch unter Bildung eines bei Raumtemperatur festen Polymerisats polymerisiert. Im Anschluß an die Lehre des Standes der Technik (z.B. DE-PS 24 49 656, EP-PS 0 214 551 oder EP-PS 0 218 866), wobei die flüssigen Polymervorstufen eine Viskosität von weniger als 5 Pa s, vorzugsweise von weniger als 0,5 Pa s bei der zur Formgebung vorgesehenen Temperatur aufweisen. Als Monomere M seien vinylische Monomere oder Vinyliden-Monomere genannt (vgl. Ullmanns Enzyklopädie der Technischen Chemie, 3. Aufl., Bd. 14, Seiten 108 bis 110, Urban & Schwarzenberg, 1963), wie beispielsweise Vinylester und -ether, sowie Vinylverbindungen, vinylische Carbonylverbindungen, Vinylaromaten, heterocyclische Vinylverbindungen, makromonomere Verbindungen wie beispielsweise ungesättigte Polyester oder Polyurethane sowie insbesondere Derivate der Acryl- und der Methacrylsäure. Bevorzugt eingesetzt werden Monomere der Formel I: 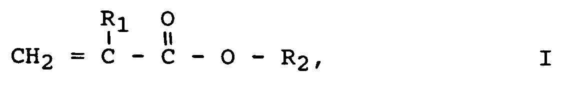
worin R₁ für Wasserstoff oder Methyl, R₂ für einen gegebenenfalls verzweigten und gegebenenfalls substituierten Alkylrest mit 1 bis 18 Kohlenstoffatomen, für einen gegebenenfalls substituierten Cycloalkylrest mit 5 bis 12 Kohlenstoffatomen oder für einen gegebenenfalls substituierten Arylrest mit 6 bis 10 Kohlenstoffatomen steht. Die an sich bekannten Substituenten sind beispielsweise Halogen, Hydroxy, Alkoxy, Dialkylaminosubstituenten mit C₁-C₁₂-Alkylresten, vorzugsweise mit C₁-C₆-Alkylresten.
Insbesondere seien als Monomere M Verbindungen der Formel I genannt, worin R₂ für Alkylreste mit 1 bis 8 Kohlenstoffatomen steht, wie beispielsweise Ethyl(meth)acrylat, Propyl(meth)acrylat, Butyl(meth)acrylat bzw. Isomere, 2-Ethylhexyl(meth)acrylat, Cyclohexyl(meth)acrylat, Phenyl(meth)acrylat, Benzyl(meth)acrylat, sowie speziell Methylmethacrylat. Ferner können die Polymervorstufen noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Seite 184, Springer-Verlag, 1967), wobei exemplarisch Ethylenglykoldimethacrylat, 1,4-Butandioldimethacrylat, Triglykoldimethacrylat, Trimethylolpropantrimethacrylat, Allylverbindungen wie Allylmethacrylat oder Triallylcyanurat genannt seien. Der Gehalt an vernetzenden Monomeren liegt im allgemeinen bei 0,01 bis 10 Gew.-%, vorzugsweise bei 0,1 bis 5 Gew.-% bezogen auf die flüssigen Polymervorstufen.
Vorzugsweise enthalten die Polymervorstufen einen Gehalt von über 50 Gew.-%, speziell von 80 bis 100 Gew.-% an Methylmethacrylat. Als Comonomere können weitere mit den Methacrylestern der Formel I copolymerisierbare Monomere verwendet werden, wie beispielsweise die schon genannten Vinylaromaten und heterocyclischen Vinylverbindungen, so z.B. Styrol, ringsubstituierte Styrole, α-Methylstyrol, Divinylbenzol, Vinylpyrrolidon oder Vinylpyridin, Acrylnitril und Methacrylnitril, Vinylester wie Vinylacetat oder Vinylpropionat, Vinylchlorid oder Vinylidenchlorid. Im allgemeinen überwiegt der gleichmäßige Anteil der (Meth)acrylsäureester der Formel I und der vernetzenden Monomeren (> 50 Gew.-%), der vorteilhaft bis 100 Gew.-% der Polymervorstufe ausmachen kann. Besonders günstig ist ein Gemisch aus dem Monomeren Methylmethacrylat und einem vernetzenden Monomeren, wie beispielsweise Glykoldimethacrylat, wobei das Gewichtsverhältnis vorteilhaft zwischen 95 : 5 und 99,9 : 0,1 liegt. Vorzugsweise enthält die flüssige, organische, polymerisierbare Vorstufe Praepolymerisate PM, die im allgemeinen aus denselben Monomeren M wie die polymerisierbare Vorstufe aufgebaut sind, wobei die Praepolymerisate PM jedoch keine funktionalisierten Monomere enthalten. Im allgemeinen gelten die selben Proportionen wie für die Monomeren M angegeben. Die monomeren Bestandteile der Praepolymerisate PM können identisch sein mit den Monomeren M oder auch von diesen verschieden. Vorzugsweise sind die Praepolymerisate PM in den Monomeren M gelöst, sie können aber auch darin dispergiert sein. In der Regel haben die Praepolymerisate PM mittlere Molekulargewichte M_{w} im Bereich zwischen 2 x 10⁴ und 4 x 10⁵ Dalton (Bestimmung durch Gelpermeationschromatographie, vgl. hierzu: H.F. Mark et.al., Encyclopedia of Polymer Science and Technology, Vol. 10, Seiten 1 bis 19, J. Wiley, 1987). Der Anteil der Praepolymerisate PM an den flüssigen Polymervorstufen liegt im Bereich 0 bis 20 Gew.-%, vorzugsweise 0 bis 10 Gew.-%. Beispielsweise kann das Praepolymerisat PM ein Copolymerisat aus Methylmethacrylat und Methylacrylat im Gewichtsverhältnis 9 : 1 mit einem mittleren Molekulargewicht M_{w} von etwa 2,5 x 10⁵ Dalton sein.

### Das Silanisierungsmittel C)

Die Organosiliciumkomponente C) dient in an sich bekannter Weise als Haftvermittler zwischen Füllstoff und organischer Phase des Gießharzes, wobei die aus dem Stand der Technik bekannten Organosiliciumverbindungen Verwendung finden. In erster Linie handelt es sich um funktionelle Organosiliciumverbindungen mit mindestens einer ethylenisch ungesättigen Gruppe im Molekül. Der die ethylenisch ungesättigte Gruppe tragende funktionelle Rest ist im allgemeinen über eine Kohlenstoffatom mit dem zentralen Siliciumatom verknüpt. Die verbleibenden Liganden am Silicium sind in der Regel Alkoxyreste mit 1 bis 6 Kohlenstoffatomen, wobei sich noch Etherbrücken im Alkylrest befinden können. Genannt seien Trialkoxysilane, wie Vinyltrialkoxysilane oder Organosiliciumverbindungen, bei denen die CC-Doppelbindung über ein oder mehrere Kohlenstoffatome mit dem Si-Atom verbunden sind, wie Allyltrialkoxysilane oder γ-Methacryloyloxypropyltrialkoxysilane. Weiterhin können Dialkoxysilane verwendet werden, wobei am Si-Atom ein weiterer funktioneller Rest mit einer CC-Doppelbindung, meist des gleichen Typs, oder ein Alkylrest mit vorzugsweise 1 bis 6 Kohlenstoffatomen gebunden ist. Als Organosiliciumkomponente können beispielsweise dienen: Vinyltrimethoxysilan, Vinyltriethoxysilan, Vinyltriacetoxysilan, Vinyltris(methoxyethoxy)silan, Divinyldimethoxysilan, Vinylmethyldimethoxysilan, Vinyltrichlorsilan, γ-Methacryloyloxypropyltrimethoxysilan, γ-Methacryloyloxypropyltris(methoxyethoxy)silan oder Gemische der vorstehend genannten Komponenten. Vorteilhafterweise werden die Organosiliciumverbindungen zusammen mit Katalysatoren vom Amintyp, insbesondere vom Typ der Alkylamine mit 3 bis 6 Kohlenstoffatomen, speziell mit n-Butylamin verwendet. Der Aminkatalysator wird im allgemeinen in Mengen von 0,5 bis 10 Gew.-%, vorzugsweise 1 bis 5 Gew.-% bezogen auf die Organosiliciumverbindung eingesetzt. Im allgemeinen beträgt das Gewichtsverhältnis von anorganischem Füllstoff A) zur Organosiliciumverbindung C) zwischen 500 : 1 bis 20 : 1, vorzugsweise (50 ± 25) : 1.

Das vorliegende Verfahren eignet sich zur Anwendung mit den üblichen feinteiligen anorganischen Füllstoffen wie sie z.B. in der US-A beschrieben sind. Zweckkmäßig wird eine Korngröße von 200, speziell von 100 µm nicht überschritten. Teilchen mit einer Größe von ≦ 0,1 µm sollen nach Möglichkeit nicht mehr als 20 % der gesamten Teilchenzahl ausmachen. Die Teilchengröße kann nach den üblichen Verfahren bestimmt werden [vgl. B. Scarlett in "Filtration & Separation" pg. 215, (1965)] wobei zur Teilchengrößenbestimmung die jeweils größten Abmessungen der Partikel herangezogen werden.
Besonders bevorzugt als partikelförmiger Füllstoff ist einschlägig verwendetes Aluminiumhydroxid bzw. Aluminiumoxidhydrat.
Der Füllstoffanteil an den Gießharzen (die sämtliche zum Einsatz kommende Bestandteile enthalten) vor dem Vergießen liegt bei mindestens 40 Gew.-% und bis zu 80 Gew.-%, vorzugsweise bei ca. 66 Gew.-%.
Als Radikalinitiatoren werden ebenfalls an sich übliche, beispielsweise Peroxy- bzw. Peroxydicarbonat oder Azo-Initiatoren wie Azodiisobutyronitril (AIBN) oder Diacylperoxide in den üblichen Mengen, z.B. 0,02 bis ca. 1 Gew.-% bezogen auf die vorhandenen Monomeren oder bzw. einschlägig verwendete Redox-Initiatoren eingesetzt. Zur praktischen Durchführung des Verfahrens wird zunächst die Vorlösung hergestellt, die beispielsweise als Hilfsstoffe für die Silanisierung eine Aminkomponente sowie das Silanisierungsmittel enthalten kann. Dann wird mit Hilfe eines Dissolvers der Füllstoff und gegebenenfalls die Pigmente, Farbmittel und sonstige Hilfsstoffe in die Vorlösung eingetragen sowie das pyrogene oder thermisch erzeugte, hochdisperse Siliciumdioxid, vorzugsweise in Form des Produkts AEROSIL ® 200. Die so erhaltene Suspension, die einen oder mehrere Initiatoren enthält, wird nach erfolgter Dispersion aller Bestandteile, z.B. mittels eines Dissolvers (schnellaufender Intensivrührer) in die übliche Polymerisationskammer, vorzugsweise bestehend aus Silkatglasplatten, die mit distanzhaltenden Dichtschnüren versehen sind, verfüllt und gehärtet, beispielsweise ca. 4 - 5 Stunden bei 40 Grad C. Zur Endpolymerisation werden die Polymerisationskammern noch eine gewisse Zeit, beispielsweise 1- 2 Stunden bei erhöhter Temperatur, beispielsweise 110 Grad C im Temperschrank gehalten. Nach dem Abkühlen wird entformt. Die Platten sind gewöhnlich auf eine Dicke im Bereich 5 bis 20 mm eingestellt.

### Vorteilhafte Wirkungen

Das erfindungsgemäße Verfahren liefert überraschenderweise hochgefülltes Plattenmaterial von sehr guter Qualität, bei dem keine Durchbiegung feststellbar ist. Ein weiterer Vorteil, der aus dem Zusatz pyrogenen bzw. thermisch erzeugten, hochdispersen Siliciumdioxids resultiert, besteht darin, daß die Viskosität bei der Scherung der Suspension bedeutend niedriger ist als im Ruhezustand, wo sich ein thixotropes Netzwerk ausbilden kann. Während des wichtigen Füllvorgangs der Kammer, wenn eine niedrige Viskosität erwünscht ist, wird diese tatsächlich eingestellt, während sich nach Beendigung des Füllvorgangs sofort wieder ein thixotropes Netzwerk aufbaut, das die Sedimentation der vorhandenen Teilchen effektiv verhindert.

Die folgenden Beispiele dienen zur Erläuterung der Erfindung.

### BEISPIELE

### A. Herstellung einer hochgefüllten Suspension

### Beispiel A-1

In 296,99 g MMA und 0,03 g 2,4-Dimethyl-6-tert-butylphenol werden 40 g PMMA-Praepolymerisat (η_{spez/c} = 130 - 140, M_{w} ca. 400.000) (Plexigum M920 ®) bei ca 40 Grad C innerhalb 5 Stunden gelöst und danach auf Zimmertemperatur abgekühlt. In diesem Sirup werden 5,0 g Stearinsäure und 3,0 g Glykoldimethacrylat gelöst. Am Dissolver werden unter mäßigem Rühren 5 g Aerosil 200 ®, 330,0 g Aluminiumnydroxid mit einer mittleren Teilchengröße von 45 µm (ALCOA C33 ®, Produkt der Fa. ALCOA, USA) und danach 330,0 g Aluminiumhydroxid mit einer mittleren Teilchengröße von 8 µm (ALCOA C333 ®) in den Sirup eingetragen. Danach wird die Suspension mit dem Dissolver (Typ HD 7,5 der Fa. Getzmann, BRD) mit 20,0 m/sec. ca. 10 Minunten dispergiert. Nach Abkühlen auf Raumtemperatur werden in der Suspension am Flügelrührer 1 g Bis-(4-tert-butylcyclohexyl)-peroxidicarbonat und 1 g tert.-Butylperpivalat gelöst und die eingeschlossenen Luftbläschen unter Anlegen eines Vakuums innerhalb sehr kurzer Zeit aus der Suspension entfernt.

### B. Herstellung von hochgefülltem Plattenmaterial

Aus zwei Silikatglasscheiben (Dicke 6 mm) war mit Hilfe einer runden PVC-Schnur (Durchmesser 3,2 mm) eine Kammer gebaut worden. In den Zwischenraum der Silikatglaskammer wird die Suspension gemäß A-1 eingegossen und die Kammer verschlossen. Die gefüllte Kammer wird waagrecht in ein Wasserbad von 40 Grad C eingelegt. Die Polymerisationszeit beträgt 260 Minuten. Anschließend wird in einem Trockenschrank 30 Minuten bei 105 Grad C endpolymerisiert. Danach wird die Kammer entformt und der ausgehärtete Gießling entnommen. Der Plattengießling hat beidseitig hochglänzende Oberflächen und ist nicht durchgebogen.

### Vergleichsbeispiel

Suspensionsherstellung wie im Beispiel 1 beschrieben, wobei die 5 g Aerosil 200 ® durch 2,5 g ALCOA C33 ® und 2,5 g ALCOA C333 ® ersetzt werden.
Herstellung des Plattengießlings wie in Beispiel 1 beschrieben.
Der mit dieser Suspension, ohne Aerosil 200 ® hergestellte Plattengießling hat eine beidseitig hochglänzende Oberfläche und ist deutlich durchgebogen.

## Patentansprüche

1. Verfahren zur Herstellung von hochgefülltem Kunststoff-Plattenmaterial nach dem Kammer-Polymerisations-verfahren unter Verwendung einer gebräuchlichen, monomerhaltigen Vorlösung und an sich gebräuchlicher Füll- und Hilfsstoffe, wobei man die monomerhaltige Vorlösung VL in die füllstoffhaltige Suspension überführt und das somit gebildete, mindestens einen radikalischen Initiator enthaltende, Gießharz in die Polymerisationskammer verfüllt, die Polymerisation vornimmt und anschließend entformt,
dadurch gekennzeichnet,
daß das Gießharz pyrogenes oder thermisch erzeugtes, hochdisperses Siliciumdioxid in Mengen von 0,1 bis 5 Gew.-% enthält.

2. Verfahren gemäß Anspruch 1, dadurch gekennzeichnet, daß das Kunststoff-Plattenmaterial ganz oder überwiegend aus Polymethylmethacrylat besteht.

3. Verfahren gemäß Anspruch 1, dadurch gekennzeichnet, daß als Füllstoff Aluminiumhydroxid oder Aluminiumoxidhydrat verwendet wird.

4. Verfahren gemäß den Ansprüchen 1 bis 3, dadurch gekennzeichnet, daß der Füllstoffgehalt des Gießharzes bei mindestens 40 und bis zu 80 Gew.-% beträgt.

5. Verfahren gemäß den Ansprüchen 1 bis 4, dadurch gekennzeichnet, daß die Vorlösung VL aus einem Polymethylmethacrylat-Praepolymerisat und Methylmethacrylat im Verhältnis 5 bis 30 Gew.-Teile zu 95 bis 70 Gew.-Teilen aufgebaut ist.

6. Verfahren gemäß Anspruch 5, dadurch gekennzeichnet, daß das Polymethylmethacrylat eine Molmasse von 2 x 10⁴ bis 4 x 10⁵ Dalton besitzt.
